Europäisches Patentamt

**European Patent Office**

Office européen des brevets

(19)

(11) Numéro de publication: **0 155 883**
**A1**

## (12) DEMANDE DE BREVET EUROPEEN

(21) Numéro de dépôt: **85400391.0**

(22) Date de dépôt: **28.02.85**

(51) Int. Cl.⁴: **G 21 C 1/02**
**G 21 C 13/02, G 21 C 5/10**

(30) Priorité: **06.03.84 FR 8403456**

(43) Date de publication de la demande:
**25.09.85 Bulletin 85/39**

(84) Etats contractants désignés:
**BE DE GB IT**

(71) Demandeur: **COMMISSARIAT A L'ENERGIE ATOMIQUE Etablissement de Caractère Scientifique Technique et Industriel**
**31/33, rue de la Fédération**
**F-75015 Paris(FR)**

(71) Demandeur: **ELECTRICITE DE FRANCE Service National**
**2, rue Louis Murat**
**F-75008 Paris(FR)**

(72) Inventeur: **Artaud, Robert**
**9, Avenue Claude Debussy**
**F-13100 Aix en Provence(FR)**

(72) Inventeur: **Peturaud, Pierre**
**2, rue Nostradamus**
**F-13100 Aix en Provence(FR)**

(74) Mandataire: **Mongrédien, André et al,**
**c/o BREVATOME 25, rue de Ponthieu**
**F-75008 Paris(FR)**

(54) **Réacteur nucléaire à neutrons rapides à cuve posée.**

(57) L'invention concerne un réacteur nucléaire à neutrons rapides dont la cuve (14) est posée sur le fond (12a) du puits de cuve (12).

Une sole (46) est intégrée au fond de la cuve (14), à l'intérieur de celle-ci. Cette sole comprend des poutres radiales (48) et des raidisseurs circonférentiels (50) soudés entre eux et au fond de la cuve. La cuve (14) prend appui sur le fond (12a) du puits de cuve par l'intermédiaire de dispositifs d'appui (34) placés à la verticale des intersections entre les poutres et les raidisseurs. Le sommier (32) supportant le coeur (20) et les composants tels que les pompes (24) et les échangeurs (22) s'appuient de préférence sur la sole (46).

./...

FIG. 2

Réacteur nucléaire à neutrons rapides à cuve posée

La présente invention se rapporte à un réacteur nucléaire à neutrons rapides refroidi par un métal liquide.

De façon plus précise, l'invention concerne un réacteur à neutrons rapides du type comprenant une cuve remplie de métal liquide et contenant le coeur du réacteur, une dalle de fermeture obturant la cuve, cette dernière étant disposée dans un puits de cuve, de telle sorte que le fond de la cuve soit posé sur le fond du puits de cuve.

Les réacteurs à neutrons rapides de ce type présentent certains inconvénients tels que ceux énumérés ci-après.

Tout d'abord, le fond de la cuve est à la température dite "tiède" du sodium relativement froid qui doit être réinjecté dans le coeur du réacteur par les pompes du circuit primaire. Au contraire, le fond du puits de cuve est à une température dite "froide" voisine de l'ambiante. Il en résulte qu'il se produit entre le fond de la cuve et le fond du puits de cuve des dilatations différentielles qui nécessitent de faire reposer la cuve sur le fond du puits de cuve par l'intermédiaire de supports autorisant des mouvements radiaux de dilatations différentielles.

Par ailleurs, le fond de la cuve assure le transfert vers le fond du puits de cuve de la masse de la cuve elle-même, augmentée des masses du sodium liquide et des différents composants logés à l'intérieur de la cuve. Parmi ces composants se trouve notamment le coeur du réacteur.

Dans les réacteurs connus de ce type, étant donné que le fond de la cuve est en appui sur le fond du puits de cuve par l'intermédiaire de supports définis-

B 8041.3 GP

sant des contacts quasi ponctuels, la bonne tenue mécanique de la cuve impose de faire reposer le coeur du réacteur sur le fond de la cuve par l'intermédiaire d'une structure de supportage généralement appelée platelage. Les hauteurs de la cuve du réacteur et, par conséquent, du puits de cuve, se trouvent ainsi accrues d'une valeur correspondant à la hauteur du platelage qui ne participe en rien au fonctionnement du réacteur. Le coût du réacteur est donc pénalisé de façon très sensible par cette conception.

La présente invention a précisément pour objet un réacteur nucléaire à neutrons rapides et à cuve posée dans lequel le fond de la cuve est renforcé de façon à permettre un appui direct du sommier d'alimentation du coeur sur le fond de la cuve. Une réduction sensible de la hauteur du bloc réacteur et, par conséquent, du coût du réacteur est ainsi rendue possible.

A cet effet, il est proposé conformément à l'invention un réacteur nucléaire à neutrons rapides comprenant une cuve remplie de métal liquide et contenant le coeur du réacteur, une dalle de fermeture obturant la cuve et un puits de cuve dans lequel est disposée ladite cuve, le fond de la cuve reposant sur le fond du puits de cuve, caractérisé en ce que des poutres radiales sont soudées au fond de la cuve à l'intérieur de celle-ci, et reliées entre elles par des raidisseurs circonférentiels, de façon à former une structure de raidissement, dénommée sole, intégrée au fond de la cuve, ce dernier reposant sur le fond du puits de cuve par l'intermédiaire de dispositifs d'appui placés à la verticale des intersections des poutres et des raidisseurs.

Le coeur du réacteur reposant de façon connue sur un sommier d'alimentation assurant également son supportage, la structure du fond de cuve selon l'inven-

B 8041.3 GP

tion permet d'utiliser un sommier non autoporteur s'appuyant sur ladite sole par l'intermédiaire de patins.

Généralement, la cuve d'un réacteur à neutrons rapides comprend un certain nombre de composants du circuit primaire tels que des pompes et des échangeurs. Conformément à un autre aspect de l'invention, ces composants sont en appui sur ladite sole, à la verticale des intersections des poutres et des raidisseurs.

De préférence, les dispositifs d'appui par lesquels la cuve repose sur le fond du puits de cuve comprennent un dispositif central rigide, disposé selon l'axe vertical de la cuve et des dispositifs d'appui périphériques comportant des moyens pour permettre un déplacement radial relatif entre le fond de la cuve et le fond du puits de cuve et des moyens pour interdire un déplacement circonférentiel relatif entre ces fonds.

Selon un mode de réalisation préféré de l'invention, les dispositifs d'appui périphériques comprennent alors chacun au moins un rouleau placé entre des cages de roulements solidaires respectivement du fond de la cuve et du fond du puits de cuve et dont les flancs interdisent un déplacement circonférentiel relatif entre ces fonds.

Afin d'éviter que le fond de la cuve ne subisse des contraintes thermiques trop importantes, notamment en raison des jets de fuite qui sont créés habituellement au niveau du pied des assemblages constituant le coeur du réacteur et en raison d'une circulation éventuelle de sodium liquide dans la zone annulaire de la cuve, des tôles de protection thermique se recouvrant partiellement à la façon de tuiles sont disposées de préférence sur les poutres de la sole.

On décrira maintenant, à titre d'exemple non limitatif, un mode de réalisation préféré de l'inven-

B 8041.3 GP

tion en se référant aux dessins annexés dans lesquels :

    - la figure 1 est une vue en coupe verticale représentant de façon schématique un réacteur nucléaire à neutrons rapides réalisé conformément aux enseignements de la présente invention,

    - la figure 2 est une vue en coupe verticale du réacteur de la figure 1 représentant à plus grande échelle le supportage du fond de la cuve sur le fond du puits de cuve conformément à l'invention, et

    - la figure 3 est une vue en coupe horizontale selon la ligne III-III de la figure 2 montrant en vue de dessus la sole renforçant le fond de la cuve conformément à l'invention.

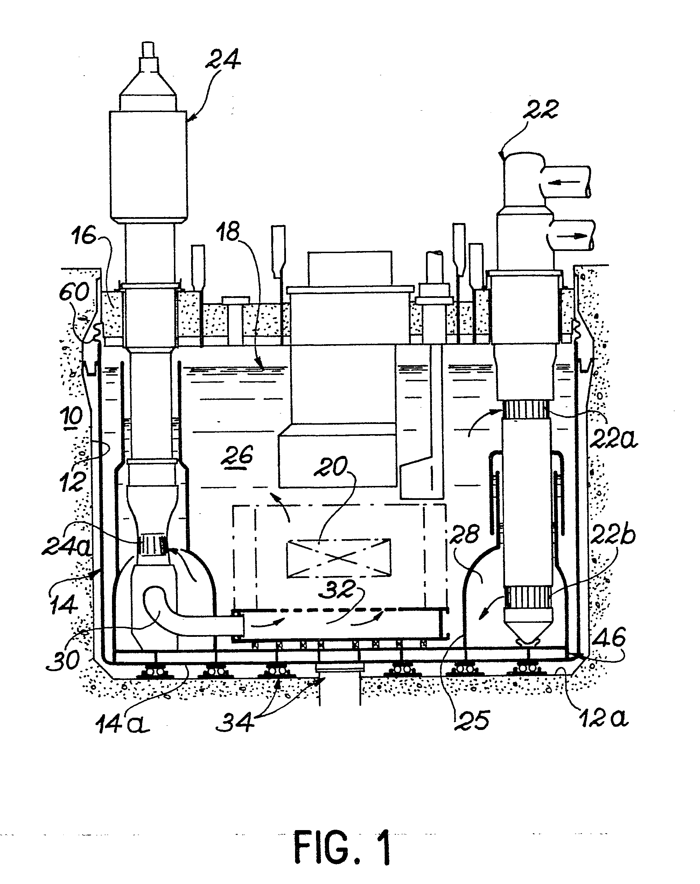

    Le réacteur nucléaire à neutrons rapides selon l'invention représenté sur la figure 1 comprend de façon connue une enceinte de béton 10 définissant un puits de cuve 12 dans lequel est posée la cuve principale 14 du réacteur. La cuve 14 est une cuve cylindrique d'axe vertical. Elle est obturée à son extrémité supérieure par une dalle de fermeture 16 en béton. La cuve 14 renferme un métal liquide 18 généralement constitué par du sodium.

    La cuve 14 contient de plus le coeur 20 du réacteur, disposé sensiblement selon l'axe vertical de la cuve, et un certain nombre de composants parmi lesquels les plus importants sont les échangeurs de chaleur 22 et les pompes primaires 24, qui sont régulièrement répartis dans la zone périphérique de la cuve 14 entourant le coeur 20. Une cuve interne 25 sépare l'intérieur de la cuve 14 en un collecteur chaud 26 situé principalement au-dessus du coeur 20 et un collecteur froid 28 situé dans la partie inférieure de la cuve 14.

    Comme on l'a représenté par des flèches sur la figure 1, le cheminement du métal liquide à l'intérieur de la cuve 14 s'effectue de la façon suivante.

B 8041.3 GP

0155883

Le sodium chaud sortant du coeur 20 à la partie supérieure de celui-ci est admis dans le collecteur chaud 26. Il pénètre alors par des orifices d'entrée 22a dans les échangeurs 22. A ce stade, la chaleur véhiculée par le métal liquide primaire est transférée au fluide secondaire circulant dans chacune des boucles du circuit secondaire (non représenté). Le fluide secondaire est généralement constitué par un métal liquide tel que du sodium.

Le métal liquide primaire ainsi refroidi sort des échangeurs 22 par des orifices de sortie 22b débouchant dans le collecteur froid 28. Il est alors repris par les orifices d'aspiration 24a des pompes 24. Celles-ci refoulent le métal liquide par des conduites 30 dans un sommier 32 assurant simultanément l'alimentation en métal liquide et le supportage du coeur 20 du réacteur.

Pour plus de détails concernant les caractéristiques générales du réacteur qui vient d'être décrit en se référant à la figure 1, on se reportera aux différentes publications qui ont été faites à propos des réacteurs français PHENIX et SUPER-PHENIX dont le principe est voisin de celui du réacteur de la figure 1.

Le réacteur représenté sur la figure 1 se distingue toutefois des réacteurs PHENIX et SUPER-PHENIX par le fait que la cuve 14 est posée sur le fond du puits de cuve 12. De façon plus précise, on voit sur la figure 1 que le fond horizontal plat 14a de la cuve 14 repose sur le fond horizontal plat 12a du puits de cuve 12 par l'intermédiaire d'un certain nombre de dispositifs d'appui 34.

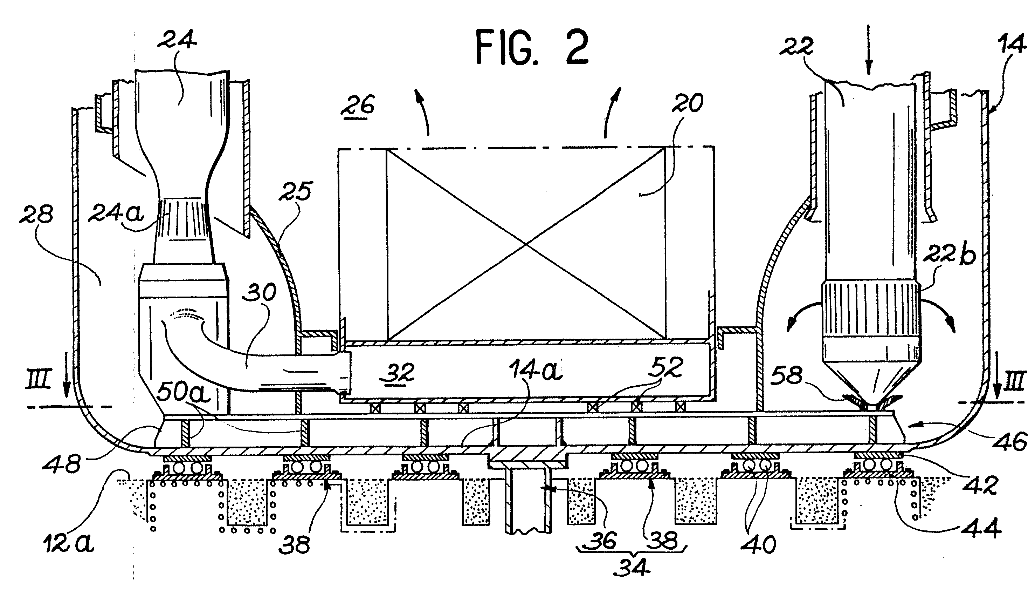

Comme l'illustre plus précisément la figure 2, les dispositifs d'appui 34 comprennent un dispositif d'appui central fixe et rigide 36 disposé selon l'axe vertical de la cuve 14 et un certain nombre de disposi-

B 8041.3 GP

6    0155883

tifs d'appui périphériques 38 dont la disposition sera précisée ultérieurement. Dans le mode de réalisation représenté, les dispositifs d'appui périphériques 38 comprennent chacun deux rouleaux 40 dont les axes sont orthogonaux à l'axe vertical de la cuve 14. Ces rouleaux 40 sont placés entre des cages 42 et 44 solidaires respectivement du fond 14a de la cuve et du fond 12a du puits de cuve. Les flancs des cages 42 et 44 interdisent un déplacement circonférentiel relatif du fond de cuve 14a par rapport au fond du puits de cuve. Une bonne tenue aux séismes est ainsi obtenue dans une direction horizontale.

Bien entendu, les appuis périphériques 38 pourraient être modifiés sans sortir du cadre de l'invention. En particulier, les appuis à rouleaux pourraient être remplacés par des appuis à billes ou par des appuis glissants. Quelle que soit la solution choisie, il est important que les dispositifs d'appui utilisés puissent absorber les dilatations différentielles entre le fond de la cuve et le fond du puits de cuve.

Conformément à l'invention, le fond horizontal plat 14a de la cuve 14 est renforcé sur sa face supérieure, c'est-à-dire à l'intérieur de la cuve, par une sole 46 intégrée au fond de la cuve.

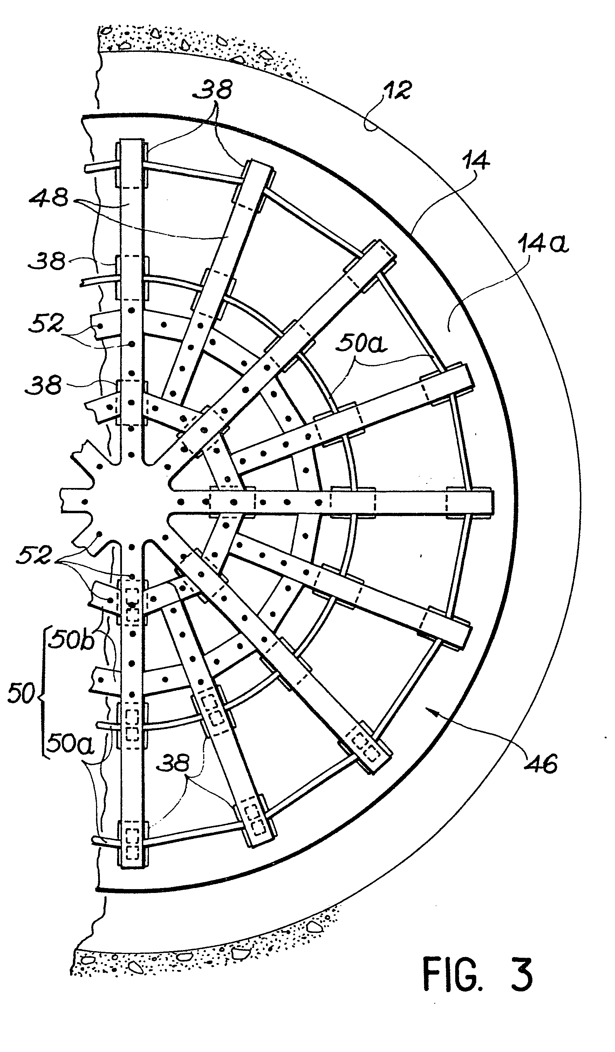

Comme l'illustre la figure 3, la sole 46 est constituée d'un certain nombre de poutres radiales 48 soudées au fond 14a de la cuve. Ces poutres 48 s'étendent depuis la zone centrale de la cuve jusqu'à proximité de sa périphérie. Dans l'exemple représenté sur la figure 3, ces poutres radiales sont au nombre de seize.

La sole 46 comprend de plus un certain nombre de raidisseurs circonférentiels 50 reliant les poutres 48 au niveau de différents diamètres de la cuve. Les raidisseurs 50 sont soudés sur les poutres radiales 48.

B 8041.3 GP

De plus, comme ces dernières, elles sont de préférence soudées au fond 14a de la cuve.

Pour une raison qui apparaîtra par la suite, les raidisseurs circonférentiels 50 disposés dans la zone annulaire entourant le coeur 20 du réacteur sont de largeur relativement réduite par rapport aux poutres radiales 48. Les raidisseurs de ce type sont au nombre de deux sur la figure 3 et ils ont été désignés par la référence 50a.

Au contraire, les raidisseurs circonférentiels qui sont situés sous le coeur 20 du réacteur présentent une largeur sensiblement égale à celle des poutres 48. Ils ont été désignés par la référence 50b sur la figure 3. Ils sont également au nombre de deux sur cette figure.

Pour des raisons d'encombrement évidentes, on voit également sur la figure 3 que seule une sur deux des poutres radiales 48 va jusqu'au centre de la cuve 14. Les autres poutres 48 s'étendent radialement vers l'extérieur à partir du raidisseur circonférentiel 50b le plus proche du centre de la cuve.

Grâce à l'intégration de la sole 46 au fond 14a de la cuve du réacteur, le fond de la cuve se trouve renforcé. Afin de bénéficier au maximum de ce renforcement, on voit sur la figure 3 que les dispositifs d'appui périphériques 38 qui sont au nombre de 40 dans le mode de réalisation représenté, sont tous placés à la verticale de certaines des intersections des poutres 48 et des raidisseurs 50. Cette caractéristique constitue également un aspect important de l'invention.

Grâce au renforcement ainsi réalisé du fond de la cuve du réacteur et grâce au choix judicieux des emplacements pour les dispositifs d'appui 38, la présente invention permet, comme l'illustrent les figures 1 et 2, de faire reposer directement le sommier 32

B 8041.3 GP

d'alimentation du coeur 20 sur la sole 46 intégrée au fond de la cuve. Le sommier 32 est donc non autoporteur. Son supportage par la sole 46 est réalisé à l'aide de cales ou supports rigides glissants désignés par la référence 52 sur la figure 2.

Comme l'illustre la figure 3, ces supports 52 prennent appui à la fois sur les poutres radiales 48 et sur les raidisseurs 50b, ce qui justifie la plus grande largeur conférée à ces derniers. Les supports 52 sont très nombreux (environ 120 dans l'exemple représenté). On conçoit aisément que les poids du coeur et du sommier sont ainsi transférés par la sole 46 aux supports 38 par lesquels la cuve repose sur le fond du puits de cuve, sans dommage pour le fond de la cuve.

De plus, le sommier 32 est centré sur la sole 46 par un clavetage central (non représenté).

Grâce à cette disposition, le platelage, par l'intermédiaire duquel le sommier prend appui sur le fond de la cuve selon la technique antérieure, est supprimé. La suppression du platelage permet une réduction de plusieurs mètres de la hauteur de la cuve 14 et de l'enceinte de béton 10. Il en résulte une réduction sensible du coût du réacteur.

Comme l'illustrent les figures 1 et 2, le renforcement du fond 14a de la cuve du réacteur au moyen de la sole 46 permet de réaliser un appui direct des composants primaires tels que les pompes 24 et les échangeurs 22 sur le fond de la cuve par l'intermédiaire de cette sole.

De façon plus précise, et comme l'illustre la figure 2, les axes verticaux des composants passent par des intersections des poutres radiales 48 et du raidisseur 50a de plus grand diamètre. Ces axes verticaux passent également par certains des dispositifs d'appui périphériques 38. Ainsi, les charges des composants

B 8041.3 GP

primaires sont transmises directement par l'intermédiaire de la sole 46, du fond 14a de la cuve et des dispositifs d'appui périphériques 38 vers le fond 12a du puits de cuve.

Afin d'autoriser le démontage pour inspection ou réparation de certains des composants primaires tels que les échangeurs 22, l'appui de ceux-ci sur la sole 46 est réalisé de façon démontable. A cet effet, comme l'illustre la figure 2, la face supérieure de la sole 46 porte des pièces d'appui coniques soudées 58. L'extrémité inférieure également conique des échangeurs 22 se centre ainsi automatiquement par rapport à la pièce 58 correspondante lorsqu'un échangeur est mis en place.

Bien entendu, une structure comparable pourrait être réalisée au niveau de l'appui des pompes 24 sur la sole 46 et au niveau de l'appui d'autres composants tels que des échangeurs de refroidissement du réacteur à l'arrêt (non représentés).

Etant donné que la cuve 14 est posée sur le fond du puits de cuve 12, alors que la dalle de fermeture 16 repose par sa périphérie sur la partie haute du puits de cuve, il est nécessaire de tenir compte des dilatations thermiques de la cuve. A cet effet, on peut prévoir comme l'illustre la figure 1 de placer entre le bord supérieur de la cuve 14 et la dalle un soufflet de dilatation 60.

De même, si les composants tels que les pompes et les échangeurs reposent sur le fond de la cuve, des soufflets de dilatation (non représentés) ou tout dispositif analogue peuvent être prévus entre ces composants et la dalle. Dans ce cas, la dalle 16 peut être allégée par rapport aux réacteurs dans lesquels celle-ci supporte les composants.

Comme on l'a déjà mentionné, l'intégration au

B 8041.3 GP

fond 14a de la cuve du réacteur d'une sole 46 permet de renforcer ce fond et autorise ainsi un appui direct du coeur et du sommier et, le cas échéant, des composants primaires. De plus, la disposition de la sole 46 à l'intérieur de la cuve 14 permet de diminuer considérablement les problèmes de dilatation différentielle entre les poutres et les raidisseurs constituant la sole et le fond de la cuve. En effet, la sole 46, comme le fond de la cuve, sont baignés simultanément par le métal liquide relativement froid qui les entoure, ce qui ne serait évidemment pas le cas si la sole était placée à l'extérieur de la cuve.

Malgré le caractère relativement homogène des températures de la sole et du fond de la cuve, il peut être nécessaire de protéger le fond de cuve des jets de fuite qui se produisent au niveau des pieds des assemblages constituant le coeur 20 du réacteur et des circulations éventuelles de métal liquide dans le collecteur froid 28.

A cet effet, dans un mode de réalisation non représenté, des tôles de protection thermique multiples sont disposées à la façon de tuiles sur les poutres 48 de la sole.

Par ailleurs, les poutres 48 et les raidisseurs 50 constituant la sole 46 définissent au fond de la cuve 14 des alvéoles pouvant servir de réceptacle en cas de fusion accidentelle partielle du coeur 20. A cet effet, des tôles calorifuges peuvent également être associées aux poutres et aux raidisseurs en-dessous du coeur du réacteur.

Bien entendu, l'invention n'est pas limitée au mode de réalisation qui vient d'être décrit à titre d'exemple mais en couvre toutes les variantes.

Ainsi, le réacteur décrit est un réacteur de type intégré dans lequel l'ensemble des composants du

B 8041.3 GP

11  0155883

circuit primaire comprenant notamment les pompes 24 et les échangeurs 22 est placé à l'intérieur de la cuve 14 du réacteur. Toutefois, l'invention s'applique également aux réacteurs nucléaires à neutrons rapides à boucles, dans lesquels les échangeurs de chaleur et, éventuellement, les pompes sont placés en dehors de la cuve du réacteur. Dans ce cas, il va de soi que la sole intégrée au fond de cuve assure seulement le supportage éventuel des composants placés à l'intérieur de la cuve.

Par ailleurs, l'invention s'applique à tous les réacteurs à neutrons rapides, quelle que soit la forme adoptée pour la cuve interne 25. Ainsi, cette cuve peut présenter la forme d'un redan traversé par les pompes et les échangeurs, ou encore présenter une forme cylindrique, les échangeurs étant alors reliés au collecteur chaud par des conduites appropriées. La cuve interne peut également présenter une forme approximativement torique et prendre appui directement sur la sole 46. En outre, dans le cas d'un réacteur à boucles dans lequel les pompes et les échangeurs sont placés en dehors de la cuve du réacteur, la cuve interne peut même être supprimée.

Enfin, bien que la structure renforcée du fond de la cuve selon l'invention soit particulièrement avantageuse pour réaliser un appui direct des composants internes à la cuve et surtout du coeur et du sommier sur le fond de la cuve, d'autres solutions peuvent également être envisagées. Ainsi, le supportage des composants internes peut être réalisé de façon connue par la dalle 16 obturant la cuve à son extrémité supérieure. De même, dans certains cas particuliers, on peut envisager de réaliser un platelage entre le sommier et le fond de la cuve de la même manière que dans les réacteurs connus de ce type.

B 8041.3 GP

REVENDICATIONS

1. Réacteur nucléaire à neutrons rapides comprenant une cuve (14) remplie de métal liquide (18) et contenant le coeur (20) du réacteur, une dalle de fermeture (16) obturant la cuve et un puits de cuve (12) dans lequel est disposée ladite cuve, le fond (14a) de la cuve reposant sur le fond (12a) du puits de cuve, caractérisé en ce que des poutres radiales (48) sont soudées au fond de la cuve à l'intérieur de celle-ci, et reliées entre elles par des raidisseurs circonférentiels (50), de façon à former une sole (46) intégrée au fond de la cuve, le fond (14a) de la cuve reposant sur le fond (12a) du puits de cuve par l'intermédiaire de dispositifs d'appui (34) placés à la verticale des intersections des poutres et des raidisseurs.

2. Réacteur nucléaire selon la revendication 1, caractérisé en ce que le coeur (20) du réacteur repose sur un sommier d'alimentation (32) non autoporteur, ce dernier s'appuyant sur ladite sole (46) par l'intermédiaire de patins (52).

3. Réacteur nucléaire selon l'une quelconque des revendications précédentes, caractérisé en ce qu'il comprend de plus, à l'intérieur de ladite cuve (14), des composants tels que des pompes (24) et des échangeurs (22) qui sont en appui sur ladite sole (46), à la verticale des intersections des poutres (48) et des raidisseurs (50).

4. Réacteur nucléaire selon l'une quelconque des revendications 1 à 3, caractérisé en ce que les dispositifs d'appui (34) comprennent un dispositif d'appui central rigide (36), disposé selon l'axe vertical de la cuve, et des dispositifs d'appui périphériques (38) comportant des moyens (40) pour permettre un déplacement radial relatif entre le fond de la cuve et le fond du puits de cuve et des moyens (42, 44) pour

B 8041.3 GP

interdire un déplacement circonférentiel relatif entre ces fonds.

5. Réacteur nucléaire selon la revendication 4, caractérisé en ce que les dispositifs d'appui périphériques (38) comprennent chacun au moins un rouleau (40) placé entre des cages de roulements (42, 44) solidaires respectivement du fond (14a) de la cuve et du fond (12a) de puits de cuve et dont les flancs interdisent un déplacement circonférentiel relatif entre ces fonds.

6. Réacteur nucléaire selon l'une quelconque des revendications précédentes, caractérisé en ce que les fonds (14a, 12a) de la cuve et du puits de cuve sont plats.

B 8041.3 GP

1 / 3 0155883

FIG. 1

FIG. 2

FIG. 3

Office européen
des brevets

RAPPORT DE RECHERCHE EUROPEENNE

0155883
Numéro de la demande

EP  85 40 0391

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-1 528 684  (CEA)<br><br>* En entier * | 1,2,4,<br>6 | G 21 C    1/02<br>G 21 C   13/02<br>G 21 C    5/10 |
| A | US-A-4 330 371  (R.F. RAYMOND et al.)<br>* Revendication 1; figures * | 1,2 | |
| A | GB-A-  900 235  (GENERAL ELECTRIC)<br>* Page 2, lignes 100-130; page 3, lignes 1-23; figures * | 1 | |
| A | FR-A-2 191 217  (C. CHAPMAN - JOHN THOMPSON LTD.)<br>* Page  2, lignes 16-33; figures 1,2 * | 1 | DOMAINES TECHNIQUES RECHERCHES (Int. Cl.4) |
| A | FR-A-1 459 230  (NEYRPIC)<br>* En entier * | 4,5 | G 21 C    1/00<br>G 21 C   13/00<br>G 21 C    5/00 |
| A | PROCEEDINGS OF THE FIRST INTERNATIONAL CONFERENCE ON STRUCTURAL MECHANICS IN REACTOR TECHNOLOGY, Berlin, 20-24 septembre 1971, vol. 3, partie F, pages 49-62; W.O. LIVSEY: "Core support structures for gas cooled reactors"<br>* Figures 1,3,8,9 * | 1,5,6 | |

--- -/-

Le présent rapport de recherche a été établi pour toutes les revendications

| Lieu de la recherche | Date d'achèvement de la recherche | Examinateur |
|---|---|---|
| LA HAYE | 12-06-1985 | ERRANI C. |

Office européen
des brevets

**RAPPORT DE RECHERCHE EUROPEENNE**

| | DOCUMENTS CONSIDERES COMME PERTINENTS | | Page  2 | |
|---|---|---|---|---|
| Catégorie | Citation du document avec indication, en cas de besoin, des parties pertinentes | Revendication concernée | CLASSEMENT DE LA DEMANDE (Int. Cl. 4) | |
| A | FR-A-2 221 791 (BABCOCK-ATLANTIQUE, CEA) * Figure 2 * | 1,2 | | |
| | --- | | | |
| A | NUCLEAR ENGINEERING INTERNATIONAL, vol. 20, no. 231, pages 551-555, Londres, GB; S. RIPPON: "BN 600 status report" * Figures 2,3 * | 1 | | |
| | --- | | | |
| A | US-A-3 560 338  (G. BROWN) * En entier * | 1,6 | | |
| | --- | | | |
| A | FR-A-2 099 666  (BR. NUCLEAR DESIGN & CONTRUCTIONS) * Revendication 1 * | 3 | | |
| | ----- | | DOMAINES TECHNIQUES RECHERCHES (Int. Cl.4) | |

Le present rapport de recherche a ete etabli pour toutes les revendications

| Lieu de la recherche LA HAYE | Date d achèvement de la recherche 12-06-1985 | ERRANI C. | Examinateur |
|---|---|---|---|